# EUROPÄISCHE PATENTSCHRIFT

(11) **EP 2 556 110 B1**
(45) Veröffentlichungstag und Bekanntmachung des Hinweises auf die Patenterteilung: **05.03.2014**
(21) Anmeldenummer: 11712826.4
(22) Anmeldetag: 31.03.2011
(51) Int. Cl.: E04F 13/00, H01B 1/24, C09J 9/02, C09J 175/06, C08K 3/04, C08L 33/20, C08L 101/04

(54) **LEITFÄHIGER KLEBSTOFF FÜR EINEN BODENBELAG**
CONDUCTIVE ADHESIVE FOR A FLOOR COVERING
COLLE CONDUCTRICE DESTINÉE À UN REVÊTEMENT DE SOL

(30) Priorität: 08.04.2010 EP 10159325
(43) Veröffentlichungstag der Anmeldung: 13.02.2013
(73) Patentinhaber: Construction Research & Technology GmbH, 83308 Trostberg (DE)
(72) Erfinder: HUF, Alfred, 85452 Eichenried (DE); ERNST, Gunnar, 86157 Augsburg (DE)
(86) Internationale Anmeldenummer: PCT/EP2011/054990
(87) Internationale Veröffentlichungsnummer: WO 2011/124517

(56) Entgegenhaltungen:
- EP-A1- 0 276 691
- DE-A1-102006 037 582
- GB-A- 2 242 682
- DATABASE WPI Week 198408 Thomson Scientific, London, GB; AN 1984-045647 XP002641493, -& JP 59 006255 A (TOYO RUBBER IND CO LTD) 13. Januar 1984 (1984-01-13)

## Beschreibung

Die vorliegende Erfindung betrifft einen leitfähigen Klebstoff für einen Bodenbelag und dessen Verwendung.

Unter Klebstoff für einen Bodenbelag im Sinne der Erfindung werden Klebstoffe verstanden, die sich zum Verkleben von Belägen auf Untergründen eignen. Die Beläge können dabei aus Kunststoffen (textile Teppichböden, PVC-Beläge, Gummibeläge etc), Naturmaterialien (Kork oder Holz etc.) oder Mischungen daraus (Linoleum) bestehen. Aufgrund arbeitsschutzrechtlicher und ökologischer Gründe werden solche Kleber heute vorzugsweise auf Basis emissionsarmer, wässriger Polymerdispersionen formuliert. Für die Zusammensetzung dieser Kleber sei beispielhaft WO 2007141198, WO 03068885, WO03025082 (PVC-Fliesen), EP 0 221 461, US 2005113499, DE 19801892 und DE 4 404 411 genannt.

Klebstoffe auf Basis von wässrigen Polyurethan-Dispersionen haben sich weltweit in anspruchsvollen industriellen Anwendungen etabliert, zum Beispiel bei der Schuhfertigung, der Verklebung von Teilen für die KFZ-Innenausstattung, der Folienlaminierung oder der Verklebung von textilen Substraten. Die Herstellung wässriger Polyurethan- bzw. Polyurethan-Polyharnstoff-Dispersionen für Klebeanwendungen ist bekannt. Beispielsweise aus der DE 38 27 378, DE 39 42 681 und US 5 652 288 sind auch wässrige Polyurethan-Dispersionen als Klebstoffe bekannt. Formulierungen auf Basis von Polyurethan-Dispersionen als Klebstoff für einen Bodenbelag wurden aber bisher kaum verwendet, was vor allem auf deren relativ hohen Preis zurückzuführen sein dürfte.

Insbesondere in Computerräumen werden leitfähige Bodenbeläge eingesetzt, die zur Erhöhung der Leitfähigkeit auch mit leitfähigen Belagsklebern auf den Platten verklebt werden (siehe hierzu Merkblatt TKB-7, 5.5.3). Nachteilig bei den bisher bekannten wässrigen, leitfähigen Belagsklebern ist, dass die Leitfähigkeit des verarbeiteten Klebers und Bodenbelages im Laufe der Nutzung und Alterung wesentlich abnimmt und oft nicht mehr den gesetzten Anforderungen entspricht.

Es ist bekannt, Klebstoffe dadurch elektrisch leitfähig zu machen, indem man elektrisch leitfähige Substanzen wie Ruß oder Graphit einarbeitet. Hierbei beobachtet man aber bei Bodenbelagsklebern auf Basis herkömmlicher wässriger Polymerdispersionen, wie bereits erwähnt, eine zeitabhängige Abnahme der elektrischen Leitfähigkeit, so dass einige Monate alte Klebstoffe nicht mehr die voll erforderliche Fähigkeit zum Ableiten elektrischer Ladungen besitzen. Derartige wässrige Klebstoffe, welche sich auch für Bodenbeläge eignen, sind beispielsweise aus der EP 0 276 691 bekannt.

Aufgabe der vorliegenden Erfindung war es deshalb, Klebstoffe zu entwickeln, die e-missionsarm sind, eine gute Klebewirkung für verschiedene Bodenbeläge besitzen und dauerhaft eine solche elektrische Leitfähigkeit aufweisen, dass sich bildende elektrostatische Aufladungen von den verklebten Werkstoffen zuverlässig abgeleitet werden können. Darüber hinaus sollten Varianten dieses Klebstoffes nicht nur die Abführung elektrostatischer Ladung ermöglichen, sondern sogar in Verbindung mit geeigneten, zu klebenden Werkstoffen deren Isolatorwirkung erhalten. Das heißt, dass eine an offenen, spannungsführenden Geräten arbeitende Person bei versehentlicher Berührung spannungsführender Teile nicht geschädigt wird. Dies bedeutet, dass bei Verwendung eines solchen Klebstoffes in Verbindung mit geeigneten, damit zu klebenden Materialien, z.B. entsprechend leitfähigen Bodenbelägen, eine Ladungsabführung in Analogie zu DIN 51 953 und DIN 16 860 und zugleich die Isolatorforderung der VDE 0 100-Vorschrift erfüllt wird.

Neben den oben genannten Eigenschaften sollte der Klebstoff weiterhin einen hohen Anfangs-Tack aufweisen. Anfangs-Tack bedeutet, dass das frisch auf einen Untergrund aufgebrachte Kleberbett es erlaubt, auch unter innerer Spannung stehende, flächige Belagsstoffe vollflächig fest mit dem Untergrund zu verbinden. Das heißt, der Belag löst sich nicht mehr vom Kleberbett, auch wenn der Kleber selbst noch nicht abgebunden hat.

Diese Aufgabe wurde gelöst durch einen Klebstoff für einen Bodenbelag, enthaltend, bezogen auf den Gesamtklebstoff, 5 bis 30 Gew.-% mindestens einer Komponente ausgewählt aus Graphit, Ruß und/oder 0,2 bis 3 Gew.% leitfähige Carbonfasern, 25 bis 50 Gew.-% einer Polyurethandispersion mit einem Feststoffgehalt von 25 bis 65 Gew.-%, 1-40 Gew.-% eines klebrigmachenden Harzes, wobei weniger als 5 Gew.-% einer wässrigen Dispersion von Polyhydroxyether-Polymer, gepfropft mit mindestens einem acrylischen oder methacrylischen Monomer, mit einem Feststoffgehalt von 25 bis 40 Gew.-% enthalten ist.

Überraschend wurde gefunden, dass der erfindungsgemäße Klebstoff eine sehr geringe Abnahme der Leitfähigkeit auch über längere Zeit besitzt und hiermit einen deutlichen Vorteil gegenüber dem Stand der Technik erzielt wird.

Als Polyurethan-Dispersionen können wässrige Polymerdispersionen auf Basis Polyester-Polyurethan, Polyether-Polyurethan oder Acrylsäureester-Polyurethan eingesetzt werden. Es können aber auch Polyurethan-Dispersionen beispielsweise auf Basis von Polythioether, Polylacton, Polyacetal, Polycarbonat oder Polyesteramid verwendet werden. Bevorzugt sind Polyester-Polyurethan-Dispersionen, insbesondere harzmodifizierte Polyester-Polyurethan-Dispersionen.

Aufbaukomponenten des Polyurethans für die erfindungsgemäße Verwendung sind im wesentlichen Polyisocyanate und Di- oder Polyhydroxylverbindungen.

Als Polyisocyanate sind insbesondere aliphatische, cycloaliphatische und aromatische Diisocyanate geeignet. Vorzugsweise werden solche mit der allgemeinen Formel X(NCO)₂ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 7 bis 15 C-Atomen steht.

Geeignete aliphatische, cycloaliphatische und aromatische Diisocyanate sind z. B. Hexamethylendiisocyanat-1,6 (HDI), 1-Isocyanato-3,3,5-trimethyl-5-isocyanatomethylcyclohexan (IPDI), 2,4- und/oder 2,6-Toluylendiisocyanat (TDI) und/oder 4,4'-, 2,4'- und/oder 2,2'-Diphenylmethandiisocyanat (MDI), m-Xylendiisocyanat (MXDI), m- oder p-Tetramethylxylendiisocyanat (m-TMXDI, p-TMXDI), 4,4'-Dicyclohexylmethandiisocyanat (H12MDI), Naphthalin-1,5-Diisocyanat, Cyclohexan-1,4-diisocyanat, hydriertes Xylylen-diisocyanat (H6XDI), 1-Methyl-2,4-diisocyanato-cyclohexan, Tetramethoxybutan-1,4-diisocyanat, Butan-1,4-diisocyanat, 1,6-Diisocyanato-2,2,4-trimethylhexan, 1,6-Diisocyanato-2,4,4-trimethylhexan, 1-Isocyanato-1-methyl-4(3)-isocyanatomethylcyclohexan (IMCI) sowie 1,12-Dodecandiisocyanat (C12DI).

Es können auch Gemische der Diisocyanate eingesetzt werden. Insbesondere haben sich Gemische von aliphatischen bzw. cycloaliphatischen Diisocyanaten mit aromatischen Diisocyanaten im Molverhältnis von 1 : 4 bis 5 : 1 als geeignet erwiesen.

Neben den Diisocyanaten können in untergeordneten Mengen auch Monoisocyanate zur Molekulargewichtsregulierung eingesetzt werden.

Die Di- oder Polyhydroxylverbindungen weisen bevorzugt ein Molekulargewicht von 400 bis 16000 g/mol auf. Es eignen sich die bei Raumtemperatur flüssigen, glasartig fest/amorphen oder kristallinen Verbindungen. Als typische Beispiele wären difunktionelle Polypropylenglykole zu nennen. Es können auch Hydroxylgruppen aufweisende statistische Copolymere und/oder Blockcopolymere des Ethylenoxids und Propylenoxids eingesetzt werden. Geeignete Polyetherpolyole sind die in der Polyurethanchemie an sich bekannten Polyether, wie die unter Verwendung von Startermolekülen hergestellten Polyole aus Styroloxid, Propylenoxid, Butylenoxid, Tetrahydrofuran oder Epichlorhydrin. Konkret eignen sich insbesondere auch Poly(oxytetramethylen)glykol (Poly-THF), 1,2-Polybutylenglykol, oder deren Mischungen. Insbesondere geeignet sind Polypropylenoxid und Polyethylenoxid und deren Mischungen. Ein weiterer als Polyolkomponente einsetzbarer Copolymertyp, der endständig Hydroxylgruppen aufweist, ist gemäß der allgemeinen Formel (herstellbar z.B. mittels "Controlled" High-Speed Anionic Polymerization gemäß Macromolecules 2004, 37, 4038-4043): 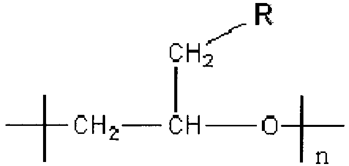 in welcher R gleich oder verschieden ist und bevorzugt durch OMe, OiPr, CI oder Br repräsentiert wird.

Bei den Polyesterdiolen handelt es sich bevorzugt um Umsetzungsprodukte von zweiwertigen Alkoholen mit zweiwertigen Carbonsäuren. Anstelle der freien Dicarbonsäuren können auch die entsprechenden Dicarbonsäureanhydride oder entsprechende Dicarbonsäureester von niederen Alkoholen oder deren Gemische zur Herstellung der Polyesterdiole verwendet werden.

Als Di- oder Polyolkomponente eignen sich die bei 25°C flüssigen, glasartig, amorphen oder kristallinen Polyester, die durch Kondensation von Di- oder Tricarbonsäuren, wie Adipinsäure, Bernsteinsäure, Maleinsäure, Fumarsäure, Sebacinsäure, Glutarsäure, Azelainsäure, Korksäure, Undecandisäure, Dodecandisäure, 3,3-Dimethylglutarsäure, Phthalsäure, Terephthalsäure, Isophthalsäure, Hexahydrophthalsäure und/oder Dimerfettsäure, mit niedermolekularen Diolen bzw. Triolen, wie Ethylenglykol, Propylenglykol, Diethylenglykol, Triethylenglykol, Dipropylenglykol, 1,4-Butandiol, 1,6-Hexandiol, 1,8-Octandiol, 1,10-Decandiol, 1,12-Dodecandiol, Dimerfettalkohol, Glycerin und/ oder Trimethylolpropan, herstellbar sind.

Eine weitere geeignete Gruppe der Polyole sind die Polyester z.B. auf der Basis von Caprolacton, welche auch als "Polycaprolactone" bezeichnet werden. Weitere einsetzbare Polyole sind Polycarbonat-Polyole und Dimerdiole sowie Polyole auf Basis pflanzlicher Öle und ihrer Derivate, wie Rizinusöl und dessen Derivate, oder epoxidiertes Sojabohnenöl. Außerdem kommen Hydroxylgruppen aufweisende Polycarbonate in Frage, welche durch Reaktion von Kohlensäurederivaten, z. B. Diphenylcarbonat, Dimethylcarbonat oder Phosgen, mit Diolen erhältlich sind. Konkret eignen sich Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, Glyzerin, Trimethylolpropan, Hexantriol-1,2,6, Butantriol-1,2,4, Trimethylolpropan, Pentaerythrit, Chinit, Mannit, Sorbit, Methylglykosid und 1,3,4,6-Dianhydrohexite. Auch die Hydroxy-funktionellen Polybutadiene, welche u.a. unter dem Handelsnamen "Poly-bd®" käuflich sind, können als Polyole ebenso wie deren hydrierten Analoga eingesetzt werden. Weiterhin kommen Hydroxy-funktionelle Polysulfide, welche unter dem Handelsnamen "Thiokol® NPS-282" vertrieben werden, sowie Hydroxy-funktionelle Polysiloxane in Frage.

Der Anteil der Di- oder Polyhydroxylverbindungen mit einem Molekulargewicht von 400 bis 16000 g/mol wird insbesondere so gewählt, dass auf 1 Grammäquivalent Isocyanat 0,1 bis 0,8, besonders bevorzugt 0,15 bis 0,6 Gewichtsäquivalente der Dihydroxylverbindung, eingesetzt werden.

Zum Aufbau des Polyurethans werden bevorzugt Kettenverlängerer eingesetzt, insbesondere mit einem Molekulargewicht unter 400 g/mol. Es handelt sich im wesentlichen um Verbindungen, welche zwei Hydroxylgruppen, zwei primäre oder sekundäre Aminogruppen oder eine Hydroxyl- und eine primäre oder sekundäre Aminogruppe enthalten. In Betracht kommen z. B. die zur Herstellung der Polyesterdiole geeigneten Alkohole, Diamine wie Ethylendiamin, Hexamethylendiamin, Piperazin, 2,5-Dimethylpiperazin, 1-Amino-3-aminomethyl-3,5,5-trimethyl-cyclohexan (Isophorondiamin), 4,4'-Diaminodicyclohexylmethan, 2,4-Diamino-cyclohexan, 1,2-Diamino-propan, Hydrazin oder Aminoalkohole wie Ethanolamin, Isopropanolamin, Methylethanolamin oder Aminoethoxyethanol.

Der Anteil der Kettenverlängerer beträgt vorzugsweise 0,1 bis 0,8 Grammäquivalente besonders bevorzugt 0 bis 0,7 Grammäquivalent bezogen auf 1 Grammäquivalent Isocyanat.

Es können auch Aufbaukomponenten mitverwendet werden, die mehr als zwei gegenüber Isocyanat reaktive funktionelle Gruppen enthalten, in diesem Fall wirken die Verbindungen über die Kettenverlängerung hinaus als Vernetzer. Genannt seien z. B. Diethylentriamin oder 1,8-Diamino-4-aminomethyloctan.

Der Anteil dieser Vernetzer liegt im allgemeinen bei 0 bis 0,4, insbesondere bei 0 bis 0,1 Grammäquivalent pro Grammäquivalent Isocyanat.

Weiterhin können hydrophile, dispergieraktive Verbindungen eingesetzt werden. Diese enthalten im Gegensatz zu den voranstehend beschriebenen Aufbaukomponenten hydrophile, dispergieraktive Gruppen. Es handelt sich insbesondere um Verbindungen mit einer lonengruppe oder in eine ionische Gruppe überführbaren Gruppe und mindestens einer gegenüber Isocyanat reaktiven Gruppe.

Geeignet sind z. B. aliphatische, cycloaliphatische oder aromatische Mono- oder Dihydroxycarbonsäuren. Bevorzugt sind Dihydroxyalkylcarbonsäuren, insbesondere mit 3 bis 10 C-Atomen, wie sie auch in der US-A-3 412 054 beschrieben sind. Insbesondere bevorzugt sind Verbindungen der allgemeinen Formel 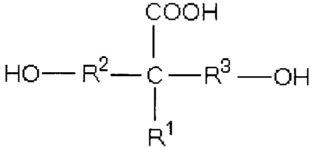 in welcher R¹ für ein Wasserstoffatom oder einen Alkylrest mit 1 bis 4 Kohlenstoffatomen und R² sowie R³ für eine C₁-C₄-Alkylengruppe stehen. Beispielsweise genannt sei 2,2-Dimethylolpropionsäure.

Erwähnenswert sind weiterhin eine oder zwei Hyroxylgruppen bzw. Aminogruppen enthaltende tertiäre Ammoniumsalze sowie Aminocarbonsäuren oder Aminosulfonsäuren, z. B. Lysin, beta -Alanin, N-(2-Aminoethyl)-2-aminoethansulfonsäure und die in der DE-A-20 34 479 genannten Addukte von aliphatischen diprimären Diaminen an α-olefinische Carbonsäuren, z. B. das Addukt von Ethylendiamin an Acrylsäure.

Zur Überführung von potentiellen anionischen Gruppen, z. B. Carbonsäuregruppen oder Sulfonsäuregruppen in ionische Guppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z. B. Triethylamin oder Dimethylaminopropanol eingesetzt werden.

Zur Überführung der potentiellen kationischen Gruppen, z. B. der tertiären Aminogruppen in die entsprechenden Kationen, z. B. Ammoniumgruppen, sind als Neutralisationsmittel anorganische oder organische Säuren, z. B. Salzsäure, Essigsäure, Fumarsäure, Maleinsäure, Milchsäure, Weinsäure, Oxalsäure oder Phosphorsäure oder als Quarternierungsmittel, z. B. Methylchlorid, Methyljodid, Dimethylsulfat, Benzylchlorid, Chloressigethylester oder Bromacetamid geeignet. Weitere geeignete Neutralisations- und Quarternierungsmittel sind z. B. in der US-A 3 479 310, Spalte 6, beschrieben.

Gegebenenfalls können auch nichtionische Emulgatoren, wie einwertige Polyetheralkohole des Molgewichtsbereiches 500 bis 20 000 g/mol, vorzugsweise von 1000 bis 5000 g/mol als hydrophile, dispergieraktive Verbindungen verwendet werden.

Durch die hydrophile, dispergieraktive Verbindung wird die Dispergierbarkeit des Polyurethans in Wasser gewährleistet. Ihr Anteil beträgt bevorzugt 0,03 bis 0,5 Grammäquivalent, insbesondere 0,05 bis 0,4 Grammäquivalent, bezogen auf 1 Grammäquivalent Isocyanat.

Die Anteile der Aufbaukomponenten des Polyurethans werden insbesondere so gewählt, dass die Summe der gegenüber Isocyanat reaktiven funktionellen Gruppen, d. h. der Hydroxyl- oder primären oder sekundären Aminogruppen 0,8 bis 1,2, bevorzugt 0,95 bis 1,05 Grammäquivalente gegenüber 1 Grammäquivalent Isocyanat beträgt.

Zur Herstellung des Polyurethans können die Aufbaukomponenten beispielsweise in einem niedrig siedenden, mit Wasser mischbaren organischen Lösungsmittel in bekannter Weise umgesetzt werden, wie es z. B. auch in der DE-A-34 37 918 beschrieben ist.

Als Lösungsmittel sind z. B. Tetrahydrofuran, Methylethylketon und insbesondere Aceton empfehlenswert.

Die Reaktionstemperatur liegt vorzugsweise bei 50 bis 100 °C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Die Überführung der in ionische Gruppen überführbaren Gruppen erfolgt zweckmäßigerweise vor oder während der Dispergierung des Polyurethans in Wasser.

Nach der Dispergierung wird das organische Lösungsmittel durch Destillation im gewünschten Ausmaß, im Allgemeinen nahezu vollständig, entfernt.

Die Herstellung des Polyurethans kann auch in der Weise erfolgen, dass in dem niedrig siedenden mit Wasser mischbaren organischen Lösungsmittel zunächst ein Polyurethanprepolymer hergestellt wird.

Dieses Prepolymer hat noch freie Isocyanatgruppen und besteht bevorzugt im Wesentlichen aus dem Polyisocyanat, der Di- oder Polyhydroxylverbindung, der hydrophilen, dispergieraktiven Aufbaukomponente und gegebenenfalls Kettenverlängerern und/oder Vernetzern. Vor oder während der Dispergierung des Prepolymeren in Wasser werden wiederum die überführbaren Gruppen in ionische Gruppen überführt.

Nach Dispergierung des Prepolymeren in Wasser werden dann die noch freien Isocyanatgruppen mit weiteren Anteilen Kettenverlängerer oder Vernetzer, wobei es sich insbesondere um Verbindungen mit primären oder sekundären Aminogruppen als gegenüber Isocyanat reaktive Gruppe handelt, umgesetzt.

Der Feststoffgehalt der wässrigen Polyurethan-Dispersion liegt zwischen 25 und 65 Gew.-%, besonders bevorzugt zwischen 30 und 50 Gew.-%.

Bevorzugt kann der Kleber noch 1 bis 20 Gew.-% einer weiteren Polymerdispersion, bezogen auf den Gesamtklebstoff, auf Basis von C₁-C₂₀-Alkyl(meth)acrylaten, Vinylestern von 1 bis 20 C-Atome enthaltenden Carbonsäuren, Vinylaromaten mit 1 bis 20 C-Atomen, ethylenisch ungesättigten Nitrilen, Vinylhalogeniden, nicht aromatischen Kohlenwasserstoffen mit mindestens 2 konjugierten Doppelbindungen oder Mischungen dieser Monomeren enthalten und die Polymerisate können, bezogen auf den Feststoffgehalt, 0 bis 40 Gew.-% weitere Monomere enthalten, insbesondere Monomere mit funktionellen Gruppen.

Im Einzelnen zu nennen sind z. B. (Meth)acrylsäurealkylester mit einem C1-C10-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, - stearat, Vinylpropionat, Versaticsäurevinylester und Vinylacetat.

Als vinylaromatische Verbindungen kommen Vinyltoluol, ortho- und para-Methylstyrol, ortho-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens zwei olefinischen Doppelbindungen seien Butadien, Isopren, und Chloropren genannt.

Besonders bevorzugt sind (Meth)acrylsäureester und deren Mischungen.

Weitere Monomere, die insbesondere von 0 bis 40 Gew.-%, vorzugsweise von 0 bis 20 Gew.-% und besonders bevorzugt von 0,2 bis 10 Gew.-% in der weiteren Polymerdispersion enthalten sein können, sind C1-C10-Hydroxyalkyl(meth)acrylate, (Meth)acrylamid sowie dessen am Stickstoff mit C1-C4-Alkyl substituierten Derivate, ethylenisch ungesättigte Carbonsäuren, Dicarbonsäuren, deren Halbester und Anhydride, z. B. (Meth)acrylsäure, Maleinsäure, Fumarsäure, Maleinsäureanhydrid, Maleinsäure- und Fumarsäurehalbester und Itaconsäure. Ganz besonders bevorzugt ist ein Gehalt von 0,2 bis 5 Gew.-% einer ethylenisch ungesättigten Carbonsäure.

Die Glasübergangstemperatur des Polymeren der weiteren Polymerdispersion liegt vorzugsweise zwischen -50 und 20 °C, insbesondere zwischen -35 °C und 20 °C, besonders bevorzugt zwischen -30 °C und 0 °C und ganz besonders bevorzugt zwischen -28 °C und -5 °C.

Die Glasübergangstemperatur des Polymeren lässt sich nach üblichen Methoden wie Differentialthermoanalyse oder Differential Scanning Calorimetrie (s. z. B. ASTM 3418/82, sog. "midpoint temperature") bestimmen.

Der Feststoffgehalt der weiteren Polymerdispersion beträgt vorzugsweise 40 bis 80 Gew.-%, besonders bevorzugt 45 bis 75 Gew.-%. Hohe Polymerfeststoffgehalte können z. B. nach Verfahren, welche in der deutschen Patentanmeldung DE 43 07 683 oder der EP 37 923 beschrieben sind, eingestellt werden.

Es ist erfindungswesentlich, dass der Klebstoff ein Additiv zur Erhöhung der Leitfähigkeit enthält, wobei es sich um mindestens eine Komponente aus der Reihe Graphit, Ruß und leitfähige Carbonfasern handelt. Ganz besonders bewährt hat sich Graphit mit einem mittleren Teilchendurchmesser von 10 bis 70 µm.

In der vorliegenden Erfindung wird der Graphit in der handelsüblichen Form eingesetzt, und kann zwecks Einarbeitung in wässriger Suspension mit einem Netz- und Dispergiermittel verarbeitet werden. Als Netz- und Dispergiermittel eignen sich unter anderem Ethylenoxydaddukte an Akylphenol (z.B. Nonylphenol), Fettalkohole oder Blockcopolymerisate von Ethylenoxid an Propylenoxid. In der Praxis haben sich Additionsprodukte von 4 bis 30 Mol Ethylenoxyd/Nonylphenol, insbesondere 6 bis 10 Mol Ethylenoxyd/Nonylphenol und 2 bis 6 Mol Ethylenoxid/Fettalkohol bewährt. Gegebenenfalls kann es auch günstig sein, zusätzlich zu den nichtionischen Netz- und Dispergiermittel anionenaktive Netz- und Dispergiermittel mitzuverwenden. Hierbei handelt es sich beispielsweise um Sulfonierungsprodukte von Alkylbenzol oder um Schwefelsäure- oder Phosphorsäureester von Fettalkoholen oder von Fettalkoholethylenoxydaddukten. Als Beispiel sei hier ein Veresterungsprodukte von 1 Mol Phosphorsäure mit 1 Mol Ethylenoxyaddukt an Fettalkohol (Molverhältnis 6 : 1) erwähnt.

Weiterhin ist es in vielen Fällen zweckdienlich, übliche Hilfsstoffe für Dispersionsklebstoffe mitzuverwenden. Es handelt sich hierbei um viskositätsbeeinflussende Zusätze wie beispielsweise anorganische Salze (z.B. Natriumhexametaphosphat) oder um Alkali- oder Ammoniumsalze niedrigmolekularer Polyacrylsäure. Weiterhin können Hydrokolloide oder auch Weichmacher (Dibutylphtalat, Dioctylphthalat, Alkylsulfonsäureester von Phenolen) eingesetzt werden. Selbstverständlich können auch niedrig siedende Lösungsmittel (wie Ethanol, Isopropanol) in geringen Mengen zur Beeinflussung verschiedener anwendungstechnischer Eigenschaften eingesetzt werden.

Bei der Konfektionierung der Klebstoffe können Konservierungsmittel z.B. phenolische Verbindungen (o-Phenylphenol oder dessen Natriumsalz, p-Hydroxybenzoesäurealkylester usw.), Hexahydrotriazinderivate, Benzisothiazolin oder Dithiocarbamate eingesetzt werden.

Sollen die Klebstoffe durch einen Sprühauftrag appliziert werden, kann es sinnvoll sein, zusätzlich Antischaummittel zu verwenden. Derartige Antischaummittel sind bekannt und werden handelsüblich auf Silikonbasis, Mineralölbasis, Fettalkoholbasis oder auf Basis von Polyalkylenglykolen oder Phosphorsäureestern im Handel angeboten. Um eine optimale Verträglichkeit des Klebstoffes und seiner Bestandteile sicherzustellen, sollte der pH-Wert mit Ammoniak oder einem anderen Regulans zwischen etwa 5 und 9 eingestellt werden.

Netz- und/oder Dispergiermittel können z. B. in Mengen von 0 bis 5 Gew.-%, Verdicker in Mengen von 0 bis 10 Gew.-%, Konservierungsmittel in Mengen von 0 bis 1 Gew.-% und Entschäumer in Mengen von 0 bis 5 Gew.-% in der wässrigen Zusammensetzung enthalten sein. Die Gewichtsangaben beziehen sich dabei auf die Summe aller Bestandteile der wässrigen Zusammensetzung, mit Ausnahme von Wasser.

Der erfindungsgemäße Kleber enthält klebrigmachende Harze (Tackifier). Der Erweichungsbereich der klebrigmachenden Harze kann insbesondere zwischen 65 und 120 °C liegen. Sie können natürlichen Ursprungs sein, wie etwa Balsamharz, und können in an sich bekannter Weise modifiziert sein. Als Modifikationen kommen Disproportionierungen, Di- und Polymerisierungen, Hydrierungen, Dienadditionen mit Dienophilen, z.B. Maleinsäureanhydrid und Veresterungen mit Glykol, Polyethylenglykolen, Glycerin, Pentaerythrit und ähnlichen Alkoholen in Frage. Weiterhin ist es möglich, Kohlenwasserstoffharze zu verwenden bzw. mitzuverwenden, die einen Erweichungspunkt im vorgenannten Bereich aufweisen. Insbesondere kann es sich um Kolophoniumharze oder modifizierte Kolophoniumharze handeln z. B. auf Basis von hydrierter Abietinsäure oder Abietinsäureestem.

Der Gehalt an Tackifiern beträgt 1 bis 40 Gew.-%. Die Gewichtsangaben beziehen sich dabei auf die Summe aller Bestandteile der wässrigen Zusammensetzung, mit Ausnahme von Wasser.

Der erfindungsgemäße Klebstoff kann zweckmäßig unter Verwendung von hochsiedenden, physiologisch nicht bedenklichen und nicht kennzeichnungspflichtigen Lösungsmitteln (Verordnung über Gefahrstoffe vom 01.10.1986) vom Typ der Alkylether des Di-, Tri-, Tetraethylenglykols und gegebenenfalls auch den Estern niedriger Carbonsäuren dieser Ether hergestellt werden. Derartige Lösungsmittel zeigen eine gewisse Hydrophilie und wirken sich besonders bei der Einarbeitung der Harze durch Viskositätssenkung der Harzschmelze günstig aus. Sie verleihen außerdem dem Haftklebstoff eine lang anhaltende konstante Klebrigkeit. Bei den Alkylresten vorerwähnter Ester der Oligoethylenglykole kann es sich um solche mit 1 und 6 C-Atomen, insbesondere aber mit 2 und 4 C-Atomen - also um die Monoethyl- und Monobutylether handeln, wobei insbesondere die physiologische Unbedenklichkeit der Oligoethylenglykolderivate bedeutsam ist. Auch andere hydrophile, physiologisch unbedenkliche hochsiedende Lösungsmittel wie Diacetin und 1,4-Butandiol können Verwendung finden. Es können durch Variation sowohl der Menge wie der Natur der hochsiedenden Lösungsmittel besonders gewünschte Eigenschaften herausgearbeitet werden.

Der Kleber enthält neben dem Polymeren noch mindestens einen Füllstoff. Der Kleber kann insbesondere Füllstoff aus der Reihe Kreide, Quarzsand, Quarzmehl, Calcit, Dolomit, Talkum, Kaolin, Glimmer, Schwerspat und Bimsmehl enthalten. Bevorzugt kommen feingemahlene oder gefällte Kreiden und/oder Quarzmehl und/oder Schwerspat mit einem mittleren Teilchendurchmesser von im allgemeinen zwischen 2 und 50 µm zum Einsatz. Bevorzugt enthält der erfindungsgemäße Klebstoff 10 bis 200 Gew.-Teile Füllstoffe, bezogen auf 100 Gew.-Teile Polymer (Trockenmasse).

Der Wassergehalt des Klebers liegt im allgemeinen bei 7 bis 50, insbesondere 10 bis 30 Gew.-%, bezogen auf Gesamtklebstoff.

Bevorzugt enthält der erfindungsgemäße Kleber mindestens eine weitere Komponenten aus der Reihe Hilfs- und Zusatzstoffe, Verdicker, Entschäumer, Dispergiermittel, Emulgatoren, Tackifier, Konservierungsmittel, Licht- und Alterungsschutzmittel, Flammschutzmittel und Biozide.

In einer bevorzugten Ausführungsform enthält der erfindungsgemäße Kleber vorzugsweise keine Weichmacher.

Der erfindungsgemäße Kleber ist vorzugsweise auch nahezu frei von organischen Lösungsmitteln wie z. B. Butylacetat und Toluol. Er enthält daher organische Verbindungen mit einem Siedepunkt unterhalb 300 °C bei Normaldruck (1 bar) in Mengen unter vorzugsweise 0,5 Gew.-% besonders bevorzugt unter 0,1 Gew.-%, ganz besonders bevorzugt unter 0,05 Gew.-% und insbesondere unter 0,01 Gew.-%. Die Gewichtsangaben beziehen sich dabei auf die Summe aller Bestandteile der wässrigen Zusammensetzung, mit Ausnahme von Wasser. Besonders bevorzugt erfüllt der Kleber Anforderungen der Emissionsfreiheit, wie sie von der Gemeinschaft Emissionskontrollierter Verlegewerkstoffe (GEV) definiert werden.

Die Emissionen werden mit einer Kammerprüfmethode bestimmt. Der Fußbodenklebstoff bzw. die erfindungsgemäße Zusammensetzung wird mit 300 g/m² auf eine Glasplatte aufgetragen, deren Größe sich nach dem Kammervolumen richtet. Die Beladung der Kammer beträgt 0,4 m² der beschichteten Glasplatte pro m³ Kammervolumen. Die Emissionsbedingungen in der Edelstahlprüfkammer (Volumen mindestens 125 Liter) sind 23 °C, 50% rel. Luftfeuchte und ein stündlicher Luftwechsel der einen Austausch der gesamten Luft alle 2 Stunden bewirkt. Nach 10 Tagen werden die Langzeitemissionen bestimmt. Dazu wird ein definiertes Volumen des Luftstroms über Adsorbentien geleitet. Nach Desorption werden die emittierten Stoffe gaschromatographisch (GC-MS-Kopplung) oder flüssigkeitschromatographisch bestimmt. Die Langzeitemissionen werden in µg/m³ bestimmt, wobei Toluol als Standardsubstanz eingesetzt wird. Emittierte Substanzen, deren Kammerkonzentration größer als 20 µg/m³ ist, werden identifiziert und mit der identifizierten Reinsubstanz und kalibriert. Emittierte Substanzen, deren Kammerkonzentration kleiner als 20 µg/m³ ist, werden nicht einzeln identifiziert. Die Kalibrierung erfolgt in diesen Fällen mit Toluol. Die Werte aller Substanzen werden addiert.

Der erfindungsgemäße Klebstoff weist in Summe nach 10 Tagen bevorzugt weniger als 500 µg/m³ an Emissionen auf.

Der Klebstoff eignet sich als Klebstoff für Bodenbeläge, insbesondere für Teppichböden oder sonstige Bodenbeläge mit Textilunterseite (z. B. Jute), Polyestervlies, Gummibeläge, Textilbeläge, z. B. auch mit unterschiedlicher Rückenausstattung (wie Polyurethanschaum, Styrol-Butadien-Schaum, textiler Zweitrücken), Nadelfilzbodenbeläge, Linoleumbeläge, auf Untergründen wie Holz, Estrich, Beton und keramische Fliesen.

Insbesondere eignet er sich zur Verklebung von PVC (in Ausführungen als Mehrschichtbeläge oder Homogenbeläge) und ganz besonders zum leitfähigen Verkleben von Doppelböden mit Leitfähigen PVC-Bodenbelägen. Insbesondere ist der erfindungsgemäße Klebstoff zum verkleben von PVC und kautschukartigen Werkstoffen auf saugende Untergründe wie Zementestrich, Kalk- und Gipsputz, Beton, Holz und Holzwerkstoffe.

Der Kleber kann z. B. mit einer Zahnleiste auf den Untergrund aufgetragen werden. Nach dem üblichen Ablüften wird der Bodenbelag eingelegt. Der erfindungsgemäße Kleber weist ein gutes Niveau von anwendungstechnischen Eigenschaften wie Schälfestigkeit, Scherfestigkeit, Nassanzugsvermögen und Trockenanfassvermögen auf.

Der Ableitwiderstand wird in Ahnlehnung an EN 13415 gemessen. In einer bevorzugten Ausführungsform beträgt der Ableitwiderstand des erfindungsgemäßen Klebstoffs weniger als 3X10⁵ Ohm, wobei der Prüfkörper vor der Messung für 10 Tage bei 50°C und für einen Tag bei 20°C gelagert wird.

Insbesondere zeigt der Kleber auch längere Zeit nach Applikation eine deutlich höhere Leitfähigkeit als die bekannten Kleber auf Basis wässriger Polymerdispersionen.

Die nachfolgenden Beispiele verdeutlichen die Vorteile der vorliegenden Erfindung.

### Beispiele

### Leitfähiger Klebstoff für einen Bodenbelag (Angaben in Gew.-%):

| | | (erfindungsgemäß) Formulierung 1 | (Vergleich) Formulierung 2 |
|---|---|---|---|
| Acrylsäureester-/ Acrylnitril-Dipersion | Bindemittel | 13,0 | 53,0 |
| Polyester-Polyurethan-Dispersion | Bindemittel | 40,0 | ----- |
| Agitan 282 | Entschäumer | 0,1 | 0,1 |
| Natronlauge 10%ig | Stabilisierer | 0,8 | 1,0 |
| Fettalkoholpolyglykolether | Netzmittel | 0,9 | 0,9 |
| Sylvamelt 401 | Harzschmelze | 6,5 | 6,5 |
| Wasser | | 3,4 | 3,2 |
| Polyacrylat-Na-Salz | Dispergiermittel | 1,0 | 1,0 |
| Acticide MBS | Konservierungsmittel | 0,3 | 0,3 |
| Timcal KS 44 | "Carbon Black" | 22,0 | 22,0 |
| Schwerspat C 11 | Füllstoff | 12,0 | 12,0 |
| | | 100,0 | 100,0 |

Die Einzelkomponenten wurden in einem Rührgefäß mittels eines Dissolverrührers homogenisiert. Geprüft wird der Widerstand in Anlehnung an die EN 13415. Auf einen leitfähigen PVC-Bodenbelag (Lingoplan AL 90) wird ein 10 cm breiter, ca. 1 mm starker Film aufgezogen. Im Abstand von 50 cm sind 2 Kupferstreifen angebracht, zwischen denen der Widerstand gemessen wird.

Die Formulierung 1 (erfindungsgemäß) steigt von 5X10³ Ohm nach 24 Stunden auf ca. 20X10³ Ohm nach Wärmelagerung (10 Tagen 50 °C und einem Tag bei 20°C).
Die Formulierung 2 (Vergleich) steigt von 3X10³ Ohm nach 24 Stunden auf ca. 1X10¹⁰ Ohm nach Wärmelagerung (10 Tagen 50 °C und einem Tag bei 20°C).

Der Widerstand darf 3X10⁵ Ohm nicht übersteigen.

## Patentansprüche

1. Klebstoff für einen Bodenbelag, enthaltend, bezogen auf den Gesamtklebstoff,
| | |
|---|---|
| 5 bis 30 Gew.-% | mindestens einer Komponente ausgewählt aus Graphit und Ruß und/oder |
| 0,2 bis 3 Gew.% | leitfähige Carbonfasern, |
| 25 bis 50 Gew.-% | einer Polyurethandispersion mit einem Feststoffgehalt von 25 bis 65 Gew.-% sowie |
| 1 bis 40 Gew.-% | klebrigmachende Harze |
wobei weniger als 5 Gew.-% einer wässrigen Dispersion von Polyhydroxyether-Polymer, gepfropft mit mindestens einem acrylischen oder methacrylischen Monomer, mit einem Feststoffgehalt von 25 bis 40 Gew.-% enthalten ist.

2. Klebstoff nach Anspruch 1, **dadurch gekennzeichnet, dass** die Polyurethandispersion auf Polyester-Polyurethan, Polyether-Polyurethan und Acrylsäureester-Polyurethan oder deren Mischungen basiert.

3. Klebstoff nach Anspruch 1 oder 2, **dadurch gekennzeichnet, dass** dieser Graphit mit einem mittleren Teilchendurchmesser von 10 bis 70 µm enthält.

4. Klebstoff nach einem der Ansprüche 1 bis 3, **dadurch gekennzeichnet, dass** dessen Ableitwiderstand weniger als 3X10⁵ Ohm beträgt, gemessen nach EN 13415, wobei der Prüfkörper vor der Messung für 10 Tage bei 50°C und für einen Tag bei 20°C gelagert wird.

5. Klebstoff nach einem der Ansprüche 1 bis 4, **dadurch gekennzeichnet, dass** dieser 1 bis 20 Gew.-% einer weiteren Polymerdispersion, bezogen auf den Gesamtklebstoff, auf Basis von C₁-C₂₀-Alkyl(meth)acrylaten, Vinylestern von 1 bis 20 C-Atome enthaltenden Carbonsäuren, Vinylaromaten mit 1 bis 20 C-Atomen, ethylenisch ungesättigten Nitrilen, Vinylhalogeniden, nicht aromatischen Kohlenwasserstoffen mit mindestens 2 konjugierten Doppelbindungen oder Mischungen dieser Monomeren enthält und die Polymerisate, bezogen auf den Feststoffgehalt, 0 bis 40 Gew.-% weitere Monomere enthalten können, insbesondere Monomere mit funktionellen Gruppen.

6. Klebstoff nach Anspruch 5, **dadurch gekennzeichnet, dass** die Glasübergangstemperatur des Polymeren der weiteren Polymerdispersion -50 bis 20 °C beträgt.

7. Klebstoff nach einem der Ansprüche 1 bis 6, **dadurch gekennzeichnet, dass** dieser keine Weichmacher enthält.

8. Klebstoff nach einem der Ansprüche 1 bis 7, **dadurch gekennzeichnet, dass** dieser mindestens einen Füllstoff aus der Reihe Kreide, Quarzsand, Quarzmehl, Calcit, Dolomit, Talkum, Kaolin, Glimmer, Schwerspat und Bimsmehl enthält.

9. Klebstoff nach einem der Ansprüche 1 bis 8, **dadurch gekennzeichnet, dass** dieser 10 bis 200 Gew.-Teile Füllstoffe, bezogen auf 100 Gew.-Teile Polymer enthält.

10. Klebstoff nach einem der Ansprüche 1 bis 9, **dadurch gekennzeichnet, dass** der Gehalt von organischen Verbindungen mit einem Siedepunkt unter 300°C (1 bar), bezogen auf den Gesamtklebstoff, kleiner 0,5 Gew.-% ist.

11. Klebstoff nach einem der Ansprüche 1 bis 10, **dadurch gekennzeichnet, dass** mindestens eine weitere Komponenten aus der Reihe Hilfs- und Zusatzstoffe, Verdicker, Entschäumer, Dispergiermittel, Emulgatoren, Tackifier, Konservierungsmittel, Licht- und Alterungsschutzmittel, Flammschutzmittel und Biozide enthalten ist.

12. Klebstoff nach einem der Ansprüche 1 bis 11, **dadurch gekennzeichnet, dass** der Wassergehalt, bezogen auf den Gesamtklebstoff, zwischen 7 und 50 Gew.-% liegt.

13. Verwendung eines Klebstoffs nach einem der Ansprüche 1 bis 11 als Klebstoff für Bodenbeläge.

14. Verwendung eines Klebstoffs nach einem der Ansprüche 1 bis 11 zum verkleben von PVC und kautschukartigen Werkstoffen auf saugende Untergründe wie Zementestrich, Kalk- und Gipsputz, Beton, Holz und Holzwerkstoffe.

## Claims

1. Adhesive for a floorcovering, comprising, based on the entire adhesive,
from 5 to 30% by weight of at least one component selected from graphite and carbon black and/or
from 0.2 to 3% by weight of conductive carbon fibres,
from 25 to 50% by weight of a polyurethane dispersion with solids content of
from 25 to 65% by weight, and also
from 1 to 40% by weight of tackifying resins,
where less than 5% by weight of an aqueous dispersion of polyhydroxyether polymer, grafted with at least one acrylic or methacrylic monomer, with solids content of from 25 to 40% by weight, is present.

2. Adhesive according to Claim 1, **characterized in that** the polyurethane dispersion is based on polyester polyurethane, polyether polyurethane or acrylate polyurethane or a mixture thereof.

3. Adhesive according to Claim 1 or 2, **characterized in that** it comprises graphite with an average particle diameter of from 10 to 70 µm.

4. Adhesive according to any of Claims 1 to 3, **characterized in that** the leak resistance thereof is less than 3×10⁵ ohms, measured to EN 13415, where the test specimen is stored for 10 days at 50°C and for one day at 20°C prior to the test.

5. Adhesive according to any of Claims 1 to 4, **characterized in that** it comprises, based on the entire adhesive, from 1 to 20% by weight of a further polymer dispersion, based on C₁-C₂₀-alkyl (meth)acrylates, on vinyl esters of carboxylic acids, where these acids comprise from 1 to 20 carbon atoms, on vinylaromatics having from 1 to 20 carbon atoms, on ethylenically unsaturated nitriles, on vinyl halides, on non-aromatic hydrocarbons having at least 2 conjugated double bonds, or a mixture of the said monomers, and the polymers can comprise, based on solids content, from 0 to 40% by weight of further monomers, in particular monomers having functional groups.

6. Adhesive according to Claim 5, **characterized in that** the glass transition temperature of the polymer of the further polymer dispersion is from -50 to 20°C.

7. Adhesive according to any of Claims 1 to 6, **characterized in that** it comprises no plasticizers.

8. Adhesive according to any of Claims 1 to 7, **characterized in that** it comprises at least one filler from the group of chalk, quartz sand, powdered quartz, calcite, dolomite, talc, kaolin, mica, baryte and powdered pumice.

9. Adhesive according to any of Claims 1 to 8, **characterized in that** it comprises from 10 to 200 parts by weight of fillers, based on 100 parts by weight of polymer.

10. Adhesive according to any of Claims 1 to 9, **characterized in that** the content of organic compounds with boiling point below 300°C (1 bar), based on the entire adhesive, is smaller than 0.5% by weight.

11. Adhesive according to any of Claims 1 to 10, **characterized in that** at least one further component is present from the group of auxiliaries and additives, thickeners, antifoams, dispersing agents, emulsifiers, tackifiers, preservatives, light stabilizers and antioxidants, flame retardants and biocides.

12. Adhesive according to any of Claims 1 to 11, **characterized in that** the water content, based on the entire adhesive, is from 7 to 50% by weight.

13. Use of an adhesive according to any of Claims 1 to 11 as adhesive for floorcoverings.

14. ruse of an adhesive according to any of Claims 1 to 11 for the adhesive bonding of PVC and of rubbery materials to absorbent substrates, such as cement screed, lime plaster and gypsum plaster, concrete, wood and wood-based materials.

## Revendications

1. Adhésif pour un revêtement de sol, contenant, par rapport à l'adhésif total,
| | |
|---|---|
| 5 à 30% en poids | d'au moins un composant choisi parmi le graphite et la suie et/ou |
| 0,2 à 3% en poids | de fibres de carbone conductrices, |
| 25 à 50% en poids | d'une dispersion de polyuréthane présentant une teneur en solides de 25 à 65% en poids ainsi que |
| 1 à 40% en poids | de résines rendant adhésif |
contenant moins de 5% en poids d'une dispersion aqueuse de polymère de polyhydroxyéther, greffé avec au moins un monomère acrylique ou méthacrylique, présentant une teneur en solides de 25 à 40% en poids.

2. Adhésif selon la revendication 1, **caractérisé en ce que** la dispersion de polyuréthane est à base de polyester-polyuréthane, de polyéther-polyuréthane et d'ester de l'acide acrylique-polyuréthane ou leurs mélanges.

3. Adhésif selon la revendication 1 ou 2, **caractérisé en ce qu'**il contient du graphite présentant un diamètre moyen des particules de 10 à 70 µm.

4. Adhésif selon l'une quelconque des revendications 1 à 3, **caractérisé en ce que** sa résistance de fuite est inférieure à 3 x 10⁵ Ohm, mesurée selon la norme EN 13415, l'éprouvette étant entreposée, avant la mesure, pendant 10 jours à 50°C et pendant un jour à 20°C.

5. Adhésif selon l'une quelconque des revendications 1 à 4, **caractérisé en ce qu'**il contient 1 à 20% en poids d'une autre dispersion de polymère, par rapport à l'adhésif total, à base de (méth) acrylate de C₁-C₂₀-alkyle, d'esters vinyliques d'acides carboxyliques contenant 1 à 20 atomes de carbone, d'aromatiques de vinyle comprenant 1 à 20 atomes de carbone, de nitriles éthyléniquement insaturés, d'halogénures de vinyle, d'hydrocarbures non aromatiques comprenant au moins 2 doubles liaisons conjuguées ou des mélanges de ces monomères et les polymères, par rapport à la teneur en solide, peuvent contenir 0 à 40% en poids d'autres monomères, en particulier des monomères présentant des groupes fonctionnels.

6. Adhésif selon la revendication 5, **caractérisé en ce que** la température de transition vitreuse des polymères de l'autre dispersion de polymère est de -50 à 20°C.

7. Adhésif selon l'une quelconque des revendications 1 à 6, **caractérisé en ce qu'**il ne contient pas de plastifiant.

8. Adhésif selon l'une quelconque des revendications 1 à 7, **caractérisé en ce qu'**il contient au moins une charge de la série craie, sable de quartz, farine de quartz, calcite, dolomite, talc, kaolin, mica, sulfate de baryum lourd et farine de pierre ponce.

9. Adhésif selon l'une quelconque des revendications 1 à 8, **caractérisé en ce qu'**il contient 10 à 200 parties en poids de charges par rapport à 100 parties en poids de polymère.

10. Adhésif selon l'une quelconque des revendications 1 à 9, **caractérisé en ce que** la teneur en composés organiques présentant un point d'ébullition inférieur à 300°C (1 bar), par rapport à l'adhésif total, est inférieure à 0,5% en poids.

11. Adhésif selon l'une quelconque des revendications 1 à 10, **caractérisé en ce qu'**il contient au moins un autre composant de la série adjuvants et additifs, épaississants, antimousses, dispersants, émulsifiants, agents poisseux, conservateurs, agents de protection contre la lumière et le vieillissement, agents ignifuges et biocides.

12. Adhésif selon l'une quelconque des revendications 1 à 11, **caractérisé en ce que** la teneur en eau, par rapport à l'adhésif total, est située entre 7 et 50% en poids.

13. Utilisation d'un adhésif selon l'une quelconque des revendications 1 à 11 comme adhésif pour revêtements de sol.

14. Utilisation d'un adhésif selon l'une quelconque des revendications 1 à 11 pour le collage de PVC et de matériaux caoutchouteux sur des substrats absorbants tels qu'une chape de ciment, un enduit de chaux et de plâtre, le béton, le bois et les matériaux à base de bois.
